# EUROPEAN PATENT SPECIFICATION

(11) **EP 3 921 290 B1**
(45) Date of publication and mention of the grant of the patent: **18.06.2025**
(21) Application number: 20707810.6
(22) Date of filing: 04.02.2020
(51) Int. Cl.: C04B 28/12, C04B 111/72

(54) **CONSTRUCTION BINDING COMPOSITION**
BINDEMITTELZUSAMMENSETZUNG ZUM BAUEN
COMPOSITION DE LIAISON POUR LA CONSTRUCTION

(30) Priority: 04.02.2019 IT 201900001603
(43) Date of publication of application: 15.12.2021
(73) Proprietor: CVR S.p.A., 06020 Gubbio (PG) (IT)
(72) Inventor: FRANCESCHETTI, Gabriele, 06020 Gubbio (PG) (IT)
(74) Representative: Brunacci, Marco
(86) International application number: PCT/IB2020/050859
(87) International publication number: WO 2020/161608

(56) References cited:
- NUNES CRISTIANA ET AL: "Microstructure of lime and lime-pozzolana pastes with nanosilica", CEMENT AND CONCRETE RESEARCH, PERGAMON PRESS, ELMSFORD, NY, US, vol. 83, 3 March 2016 (2016-03-03), pages 152 - 163, XP029505035, ISSN: 0008-8846, DOI: 10.1016/J.CEMCONRES.2016.02.004
- MARIA STEFANIDOU ET AL: "Influence of nano-silica and nano-alumina in lime-pozzolan and lime-metakaolin binders", MATERIALS TODAY: PROCEEDINGS, vol. 4, no. 7, 1 January 2017 (2017-01-01), pages 6908 - 6922, XP055630982, ISSN: 2214-7853, DOI: 10.1016/j.matpr.2017.07.020
- BEHFARNIA KIACHEHR ET AL: "The effects of nano-silica and nano-alumina on frost resistance of normal concrete", CONSTRUCTION AND BUILDING MATERIALS, ELSEVIER, NETHERLANDS, vol. 48, 15 August 2013 (2013-08-15), pages 580 - 584, XP028736136, ISSN: 0950-0618, DOI: 10.1016/J.CONBUILDMAT.2013.07.088

## Description

### Technical Field

The present invention relates to a construction binding composition.

### Background Art

With particular reference to the building sector, the use is well known of hydraulic or air-hardening binding compositions in order to bind and cement raw materials such as powders, sand, stones and other stone materials, or for the laying of blocks and bricks for the construction of masonry.

These binding compositions are mixed by adding water and sand, or gravel or crushed stone and appropriate additives that produce a moldable plastic mass which, once hardened, is able to develop over time considerable mechanical strength, thus ensuring durability and stability to the manufactured product.

The mixture of these products is characterized by the triggering of a hydration reaction that determines the development of the mechanical properties of the manufactured product. **In** detail, the hydration reaction is a sequence of chemical reactions between the components of the mixture and water which determine a setting and hardening action.

The binding compositions of known type do however have some drawbacks related to the fact that, during the setting and hardening process, the latter do not form adequate chemical bonds with the laying surface, negatively affecting the strength and durability of the bond over time.

**In** detail, the failure to form suitable chemical bonds prevents the intimate mixing of the binding composition to the laying surface, thus preventing the latter from forming a single monolithic body with the binding composition itself.

Adhesion promoters, such as e.g. primers of the chemical type, are frequently used to overcome at least some of these drawbacks.

These adhesion promoters have an adhesive function, acting as a bonding element between the laying surface and the binding composition, creating a decoupling layer between the two materials that prevents the binding composition itself from penetrating into the laying surface.

With particular reference to the maintenance and restoration sector, the binding compositions currently used do have a plurality of drawbacks, including the fact that they are often physically and chemically incompatible with the laying surface and the materials used in the past.

These binding compositions have low mechanical performance, poor chemical-physical resistance and diffuse porosity; these aspects negatively affect the durability and stability of the finished product with respect to light, climate change and the increasing presence of chemical-physical and atmospheric pollutants.

**In** addition to this, the chemical-physical aggressions suffered by the binding compositions of known type determine the consequent deterioration of their performance, thus requiring continuous and costly maintenance jobs.

**In** addition, the use of adhesion promoters has made it possible to carry out incorrect and uneven restoration work, jeopardizing the preservation of the historic-artistic heritage. The aforementioned restoration work, carried out incorrectly, results in a poor durability of the restoration work against the numerous mechanical stresses and the chemical-physical properties of the finished product, such as e.g., resistance to frost or thaw, thermal shock, fire, and alkaline action and acidic substances.

**In** this regard, with particular reference to the historically widely used Roman Cementum, the latter has numerous drawbacks linked in particular to the variability of the composition and to the purity of the components linked to the mutability of the raw materials found in nature.

**In** fact, this last characteristic determines inconstant performance of the finished product, limiting the reproducibility of the binding composition and achieving a high chromatic variability, these aspects being of considerable importance in the restoration sector.

The following literature documents deal with construction binding composition:
- NUNES CRISTIANA ET AL: "Microstructure of lime and lime-pozzolana pastes with nanosilica", CEMENT AND CONCRETE RESEARCH, PERGAMON PRESS, ELMSFORD, NY, US, vol. 83, 3 March 2016 (2016-03-03);
- MARIA STEFANIDOU ET AL: "Influence of nano-silica and nano-alumina in lime-pozzolan and lime-metakaolin binders", MATERIALS TODAY: PROCEEDINGS, vol. 4, no. 7, 1 January 2017 (2017-01-01);
- BEHFARNIA KIACHEHR ET AL: "The effects of nano-silica and nano-alumina on frost resistance of normal concrete", CONSTRUCTION AND BUILDING MATERIALS, ELSEVIER, NETHERLANDS, vol. 48, 15 August 2013 (2013-08-15).

### Description of the Invention

The main aim of the present invention is to devise a construction binding composition that features upgraded mechanical performance compared to the binding compositions of known type, particularly in terms of strength, durability and stability.

Another object of the present invention is to devise a construction binding composition that has a constant formulation, color homogeneity, high purity, and is reproducible over time.

Another object of the present invention is to devise a construction binding composition that is permeable to steam and has antibacterial activity, thus allowing the use thereof also in green building and in the restoration of historical and artistic heritage.

A further object of the present invention is to devise a construction binding composition that can be mixed, according to the specific needs of the site, with any type of inert or material in order to reproduce the appearance and grain size of an original product on which it is necessary to intervene.

Another object of the present invention is to devise a construction binding composition that allows to overcome the aforementioned drawbacks of the prior art within a simple, rational, easy, effective to use and low cost solution.

The aforementioned objects are achieved by the present construction binding composition and use thereof having the characteristics of claims 1 and **6.**

### Brief Description

Other characteristics and advantages of the present invention will be more evident from the description of a preferred, but not exclusive, embodiment of a construction binding composition and use thereof.

### Embodiments of the Invention

The present invention relates to a construction binding composition comprising a mixture of aluminum oxide and colloidal nanosilica.

It is specified that in the present discussion the term "nanosilica" relates to silica with an average particle diameter of 10 to 500 nanometres.

Preferably, colloidal nanosilica is of the amorphous type.

Aluminum oxide is present in a concentration by weight, evaluated with respect to the total weight of the composition, ranging from 0.5% to 30%.

Colloidal nanosilica is present in a concentration by weight, evaluated with respect to the total weight of the composition, ranging from 0.5% to 30%.

In addition, the composition comprises **an** inorganic binding agent comprising a mixture of hydraulic lime, calcium dihydroxide and calcium oxide.

Advantageously, the hydraulic lime is of the natural type and can be white or hazelnut in color.

In particular, the presence of binding agents determines the formation of a silica lattice inside the porosity of the application surface, thus considerably increasing the mechanical strength conferred by the binder to which the present invention relates.

Preferably, lime is present in a concentration by weight ranging from 15% to 90%, calcium oxide is present in a concentration by weight ranging from 1% to 20% and dihydroxide calcium is present in a concentration by weight ranging from 1% to 40%, the aforementioned concentrations by weight are evaluated with respect to the total weight of the composition.

It should be noted that the binding composition, to which the present invention relates, falls into category FL 5 on the basis of the relevant mechanical strength. According to the UNI-EN 459-1 standard, with a density of less than 600 g/dm³, it is expected that the compressive strength test is performed by mixing the binding composition in accordance with the present invention with water in a concentration by weight substantially equal to 60% of the total weight of the composition.

The composition according to the invention is mixed in quantities equal to 450 g with 1350 g of sand, and 270 g of water.

| | |
|---|---|
| - Normalized sand | : 1350 g |
| - Binding composition | : 450 g |
| -Water | : 270 g |

### EXAMPLE 1

By way of example, a preferred formulation of the composition according to the invention is given here below.

| | |
|---|---|
| - Natural hydraulic lime | 15% - 90% |
| - Calcium dihydroxide | 1% - 40% |
| - Calcium oxide | 1% - 20% |
| - Colloidal nanosilica | 0.5% - 30% |
| - Aluminum oxide | 0.5% - 30% |

The present invention also relates to the use of aluminum oxide and colloidal nanosilica to form a hydraulic binder.

As previously described with regard to the binding composition, aluminum oxide is present in a concentration by weight, evaluated with respect to the total weight of the binder, ranging from 0.5% to 30%.

At the same time, colloidal nanosilica is present in a concentration by weight ranging from 0.5% to 30%.

In addition, the aforementioned hydraulic binder comprises a binding agent comprising a mixture of hydraulic lime, calcium dihydroxide and calcium oxide.

**In** particular, it should be noted that the synergistic combination of aluminum oxide, colloidal nanosilica and the binding agent makes it possible to produce a mineral binder that is permeable to vapor and has high alkalinity.

The aforementioned combination of components also makes it possible to obtain a highly reactive binding composition with respect to the many laying surfaces, and materials used in construction by fixing and melting with the latter through stable bonds of the chemical type.

**In** addition, the aforementioned binding composition has technical characteristics suitable for its use in green building and in both historical and artistic restoration.

In addition to this, the aforementioned composition has a formulaic reproducibility and whole mass chromatic homogeneity. In detail, the composition to which the present invention relates, can be reproduced with the same formulation in different times and places.

In this regard, the technical characteristics of the binding composition can vary according to the users' needs; this means that the fact of modulating the formulation makes it possible to intervene on the formulation of the composition in order to maximize the technical characteristics depending on the use and application surface of the composition itself.

Furthermore, the fact of intervening on the formulation of the composition allows reducing the stiffening times of the composition itself, with a consequent reduction in the time needed to achieve the relevant technical characteristics, such as mechanical strength.

## Claims

1. Binding composition, comprising a mixture of aluminum oxide and colloidal nanosilica, **characterized by** the fact that it comprises an inorganic binding agent comprising a mixture of hydraulic lime, calcium dihydroxide and calcium oxide.

2. Composition according to claim 1, **characterized by** the fact that said aluminum oxide is present in a concentration by weight, evaluated with respect to the total weight of the composition, ranging from 0.5% to 30%.

3. Composition according to claim 1, **characterized by** the fact that said colloidal nanosilica is present in a concentration by weight, evaluated with respect to the total weight of the composition, ranging from 0.5% to 30%.

4. Composition according to one or more of the preceding claims, **characterized by** the fact that said colloidal nanosilica is of the amorphous type.

5. Composition according to one or more of the preceding claims, **characterized by** the fact that said hydraulic lime is present in a concentration by weight ranging from 15% to 90%, said calcium oxide is present in a concentration by weight ranging from 1% to 20% and said calcium dihydroxide is present in a concentration by weight ranging from 1% to 40%, said concentrations by weight being evaluated with respect to the total weight of the composition.

6. Use of aluminum oxide colloidal nanosilica and an inorganic binding agent as binding composition, **characterized by** the fact that said binding composition comprises said aluminum oxide in a concentration by weight, evaluated with respect to the total weight of the binder, ranging from 0.5 to 30%, said inorganic binding agent comprises a mixture of hydraulic lime, calcium dihydroxide and calcium oxide.

## Patentansprüche

1. Bindemittelzusammensetzung, die eine Mischung aus Aluminiumoxid und kolloidalen Nanosilika umfasst, **dadurch gekennzeichnet, dass** sie ein anorganisches Bindemittel umfasst, das eine Mischung aus hydraulischem Kalk, Calciumdihydroxid und Calciumoxid umfasst.

2. Zusammensetzung gemäß Anspruch 1, **dadurch gekennzeichnet, dass** das Aluminiumoxid in einer Gewichtskonzentration, ermittelt in Bezug auf das Gesamtgewicht der Zusammensetzung, im Bereich von 0,5 % bis 30 % vorliegt.

3. Zusammensetzung gemäß Anspruch 1, **dadurch gekennzeichnet, dass** die kolloidalen Nanosilika in einer Gewichtskonzentration, ermittelt in Bezug auf das Gesamtgewicht der Zusammensetzung, im Bereich von 0,5 % bis 30 % vorliegt.

4. Zusammensetzung gemäß einem oder mehreren der vorhergehenden Ansprüche, **dadurch gekennzeichnet, dass** die kolloidalen Nanosilika vom amorphen Typ ist.

5. Zusammensetzung gemäß einem oder mehreren der vorhergehenden Ansprüche, **dadurch gekennzeichnet, dass** der hydraulische Kalk in einer Gewichtskonzentration im Bereich von 15 % bis 90 % vorliegt, das Calciumoxid in einer Gewichtskonzentration im Bereich von 1 % bis 20 % vorliegt und das Calciumdihydroxid in einer Gewichtskonzentration im Bereich von 1 % bis 40 % vorliegt, wobei die Gewichtskonzentrationen in Bezug auf das Gesamtgewicht der Zusammensetzung ermittelt werden.

6. Verwendung von Aluminiumoxid, kolloidalen Nanosilika und einem anorganischen Bindemittel als Bindemittelzusammensetzung, **dadurch gekennzeichnet, dass** die Bindemittelzusammensetzung das Aluminiumoxid in einer Gewichtskonzentration, ermittelt in Bezug auf das Gesamtgewicht des Bindemittels, im Bereich von 0,5 bis 30 % umfasst, wobei das anorganische Bindemittel eine Mischung aus hydraulischem Kalk, Calciumdihydroxid und Calciumoxid umfasst.

## Revendications

1. - Composition liante, comprenant un mélange d'oxyde d'aluminium et de nanosilice colloïdale, **caractérisée par le fait qu'**elle comprend un agent liant inorganique comprenant un mélange de chaux hydraulique, de dihydroxyde de calcium et d'oxyde de calcium.

2. - Composition selon la revendication 1, **caractérisée par le fait que** ledit oxyde d'aluminium est présent dans une concentration en poids, évaluée par rapport au poids total de la composition, se situant dans la plage de 0,5 % à 30 %.

3. - Composition selon la revendication 1, **caractérisée par le fait que** ladite nanosilice colloïdale est présente dans une concentration en poids, évaluée par rapport au poids total de la composition, se situant dans la plage de 0,5 % à 30 %.

4. - Composition selon une ou plusieurs des revendications précédentes, **caractérisée par le fait que** ladite nanosilice colloïdale est du type amorphe.

5. - Composition selon une ou plusieurs des revendications précédentes, **caractérisée par le fait que** ladite chaux hydraulique est présente dans une concentration en poids se situant dans la plage de 15 % à 90 %, ledit oxyde de calcium est présent dans une concentration en poids se situant dans la plage de 1 % à 20 % et ledit dihydroxyde de calcium est présent dans une concentration en poids se situant dans la plage de 1 % à 40 %, lesdites concentrations en poids étant évaluées par rapport au poids total de la composition.

6. - Utilisation d'oxyde d'aluminium, de nanosilice colloïdale et d'un agent liant inorganique en tant que composition liante, **caractérisée par le fait que** ladite composition liante comprend ledit oxyde d'aluminium dans une concentration en poids, évaluée par rapport au poids total du liant, se situant dans la plage de 0,5 à 30 %, ledit agent liant inorganique comprend un mélange de chaux hydraulique, de dihydroxyde de calcium et d'oxyde de calcium.
